# EUROPEAN PATENT APPLICATION

(11) **EP 4 783 677 A1**
(43) Date of publication of application: **29.07.2026**
(21) Application number: 24876549.7
(22) Date of filing: 09.10.2024
(51) Int. Cl.: H04W 48/16

(54) **COMMUNICATION METHOD AND APPARATUS**

(30) Priority: 13.10.2023 CN 202311331854
(71) Applicant: HUAWEI TECHNOLOGIES CO., LTD., Shenzhen, Guangdong 518129 (CN)
(72) Inventor: XIE, Xi, Shenzhen, Guangdong 518129 (CN); CHANG, Junren, Shenzhen, Guangdong 518129 (CN); LI, Bingzhao, Shenzhen, Guangdong 518129 (CN); LIU, Nannan, Shenzhen, Guangdong 518129 (CN); YANG, Liu, Shenzhen, Guangdong 518129 (CN)
(74) Representative: Goddar, Heinz J.
(86) International application number: PCT/CN2024/123695
(87) International publication number: WO 2025/077736

(57) **Abstract**

This application relates to the communication field, and discloses a communication method and apparatus, to improve flexibility of accessing and camping on an NTN cell. The communication method includes: receiving first information indicating whether a region or a beam in a cell allows access or camping; and determining, based on the first information, whether to access or camp on the cell.

## Description

This application claims priority to Chinese Patent Application No. 202311331854.3, filed with the China National Intellectual Property Administration on October 13, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

A non-terrestrial network (non-terrestrial network, NTN) is a general term for networks involving aerial objects, including a satellite communication network, a high altitude platform station (high altitude platform station, HAPS), and the like. The NTN can provide a reliable mobile broadband service for a high-requirement communication scenario (for example, a region with poor terrestrial communication coverage, marine communication, public safety communication, inter-aircraft communication, and railway communication).

In the NTN, due to imperfect network configuration, flexibility of accessing and camping on a current NTN cell is poor.

### SUMMARY

This application provides a communication method and apparatus, to improve flexibility of accessing and camping on an NTN cell.

To achieve the foregoing objective, this application uses the following technical solutions.

According to a first aspect, a communication method is provided, and is applied to a terminal. The method may be performed by a terminal device, or a component or an apparatus (for example, a processor, a chip, or a chip system) used in the terminal device, or a logical module or software that can implement all or a part of functions of the terminal device. The method includes: receiving first information indicating whether a region or a beam in a cell allows access or camping; and determining, based on the first information, whether to access or camp on the cell.

In the first aspect, an access network device sends, to the terminal, the first information indicating whether the region or the beam in the cell allows access or camping. The terminal may perform access determining at a region granularity or a beam granularity based on the first information, so that high-precision cell access or camping control is implemented, and flexibility of cell access or camping control is high.

In a possible implementation, the determining, based on the first information, whether to access or camp on the cell includes: when the first information indicates that a target region in which the terminal is located in the cell or a target beam on which the terminal is located in the cell allows access or camping, determining to access or camp on the cell.

In this implementation, the terminal is controlled, at a region or beam granularity, to access the cell, so that high-precision cell access or camping control is implemented, and flexibility of cell access or camping control is high.

In a possible implementation, the first information is cell barred indication information, and the cell barred indication information indicates whether the region or the beam in the cell is barred; or the first information is unified access control information.

In this implementation, two possible forms of the first information are designed. When the first information is cell barred indication information, the method may be controlling, based on the cell barred indication information, the terminal to access or camp on the cell. When the first information is unified access control information, the method may be controlling, based on the unified access control information, the terminal to access or camp on the cell. It should be understood that the two scenarios represent control at two phases, and the two phases may be used in combination in an actual system.

In a possible implementation, when the first information is cell barred indication information, the method may further include: receiving second information indicating whether the cell is barred; and when the second information indicates that the cell is not barred, determining, based on the first information, whether to access or camp on the cell.

In this implementation, whether the cell is barred is indicated based on the second information, and when the second information indicates that the cell is not barred, the terminal determines, based on the first information, whether to access or camp on the cell, so that computing power overheads of the terminal can be reduced.

In a possible implementation, when the first information is cell barred indication information, the first information includes identification information of a region or a beam that allows access or camping; or the first information includes identification information of a region or a beam that is barred from access or camping; or the first information indicates identification information of a region or a beam and whether the corresponding region or beam is barred; or the first information includes M bits, where the M bits respectively correspond to regions or beams in the cell, and all the M bits respectively indicate whether the corresponding regions or beams are barred.

In this implementation, the first information includes only the identification information of the region or the beam that allows access or camping, so that overheads needed for transmitting the first information is low. Alternatively, the first information includes only the identification information of the region or the beam that is barred from access or camping, so that overheads needed for transmitting the first information is low. Alternatively, the first information indicates the identification information of the region or the beam and whether the corresponding region or beam is barred, so that an indication, of whether the region or the beam is barred, indicated by the first information is more comprehensive. Alternatively, each bit in the first information corresponds to a region or a beam, and whether the corresponding region or beam is barred is indicated based on information carried in each bit, so that whether a global region or beam is barred can be indicated with low overheads needed for first signaling.

In a possible implementation, the first information is unified access control information, and the method may further include: receiving unified access control information of the cell; and determining, based on the first information and the unified access control information of the cell, whether access to or camping on the cell is allowed.

In this implementation, the UAC information of the cell is received, and whether access to or camping on the cell is allowed is determined based on the first information and the UAC information of the cell, so that sending of repeated information in the UAC information of the cell and the first information is reduced, and signaling overheads are reduced.

In a possible implementation, the first information includes identification information of the region or the beam in the cell and corresponding unified access control information.

In a possible implementation, the cell is a non-terrestrial network cell.

In the first aspect and various possible implementations of the first aspect, to improve flexibility of a cell access/camping indication, a corresponding communication method is designed for a possible indication granularity division mechanism (region-based division or beam-based division) and a possible form (cell bar or UAC information) of high-granularity access/camping indication information indicated by the access network device to the terminal, so that high-precision cell access or camping control is implemented. Specifically, different regions/beams are distinguished, and different cell barred indication information (or UAC information) is configured, so that whether a terminal in a related region can camp on/access a cell is accurately controlled based on load or another requirement in an actual geographic region, to avoid an unnecessary access restriction on a terminal in an unrelated region, improve flexibility of cell access or camping control, and further optimize user experience.

According to a second aspect, a communication method is provided, and is applied to an access network device. The method may be performed by the access network device, or a component (for example, a processor, a chip, or a chip system) used in the access network device, or a logical module or software that can implement all or a part of functions of the access network device. The method includes: sending first information indicating whether a region or a beam in a cell allows access or camping.

In the second aspect, the access network device sends, to the terminal, the first information indicating whether the region or the beam in the cell allows access or camping, so that the terminal can perform access determining at a region granularity or a beam granularity based on the first information. In this way, high-precision cell access or camping control is implemented, and flexibility of cell access or camping control is high.

In a possible implementation, the method further includes: determining first information indicating whether the region or the beam in the cell allows access or camping.

In a possible implementation, the first information is cell barred indication information, and the cell barred indication information indicates whether the region or the beam in the cell is barred; or the first information is unified access control information.

In this implementation, two possible forms of the first information are designed, to improve universality of cell access or camping.

In a possible implementation, the first information is cell barred indication information, and the method further includes: sending second information, where the second information indicates whether the cell is barred.

In this implementation, whether the cell is barred is indicated based on the second information, so that the terminal can determine, based on the second information, whether to determine, based on the first information, whether to access or camp on the cell, to reduce computing power overheads of the terminal.

In a possible implementation, when the first information is cell barred indication information, the first information includes identification information of a region or a beam that allows access or camping; or the first information includes identification information of a region or a beam that is barred from access or camping; or the first information indicates identification information of a region or a beam and whether the corresponding region or beam is barred; or the first information includes M bits, where the M bits respectively correspond to regions or beams in the cell, and all the M bits respectively indicate whether the corresponding regions or beams are barred.

In this implementation, the first information includes only the identification information of the region or the beam that allows access or camping, so that overheads needed for transmitting the first information is low. Alternatively, the first information includes only the identification information of the region or the beam that is barred from access or camping, so that overheads needed for transmitting the first information is low. Alternatively, the first information indicates the identification information of the region or the beam and whether the corresponding region or beam is barred, so that an indication, of whether the region or the beam is barred, indicated by the first information is more comprehensive. Alternatively, each bit in the first information corresponds to a region or a beam, and whether the corresponding region or beam is barred is indicated based on information carried in each bit, so that whether a global region or beam is barred can be indicated with low overheads needed for first signaling.

In a possible implementation, the first information is unified access control information, and the method may further include: sending unified access control information of the cell.

In this implementation, the UAC information of the cell is sent to the terminal, so that the terminal can determine, based on the UAC information of the cell, whether access to or camping on the cell is allowed, to reduce sending of repeated information in the UAC information of the cell and the first information, and reduce signaling overheads.

In a possible implementation, the first information includes identification information of the region or the beam in the cell and corresponding unified access control information.

In a possible implementation, the first information indicates whether the beam in the cell allows access or camping, the first information includes set indication information, and the set indication information indicates whether different beams allow access or camping. The sending the first information includes: sending the set indication information on all beams.

In this implementation, the same first information is sent on each beam, and system information corresponding to different beams is consistent, so that the terminal can implement cross-beam system information combination, to obtain a combination gain.

In a possible implementation, the first information indicates whether the beam in the cell allows access or camping, the first information includes a plurality of pieces of beam-level indication information, different beams correspond to different beam-level indication information, and the beam-level indication information indicates whether a beam corresponding to the beam-level indication information allows access or camping. The sending the first information includes: sending, to the beam, the beam-level indication information corresponding to the beam.

In this implementation, the access network device sends, on the beam, the beam-level indication information corresponding to the beam, so that an access/camping indication at a beam granularity can be implemented.

In a possible implementation, the cell is a non-terrestrial network cell.

In the second aspect and various possible implementations of the second aspect, to improve flexibility of a cell access/camping indication, a corresponding communication method is designed for a possible indication granularity division mechanism (region-based division or beam-based division) and a possible form (cell bar or UAC information) of high-granularity access/camping indication information indicated by the access network device to the terminal, so that high-precision cell access or camping control is implemented. Specifically, different regions/beams are distinguished, and different cell barred indication information (or UAC information) is configured, so that whether a terminal in a related region can camp on/access a cell is accurately controlled based on load or another requirement in an actual geographic region, to avoid an unnecessary access restriction on a terminal in an unrelated region, improve flexibility of cell access or camping control, and further optimize user experience.

According to a third aspect, a communication apparatus is provided. The communication apparatus may be a terminal, or a chip or a system-on-a-chip in the terminal. The communication apparatus may implement functions performed by the terminal according to any one of the first aspect or the possible designs of the first aspect. The functions may be implemented by hardware, or may be implemented by hardware executing corresponding software. The hardware or software includes one or more modules corresponding to the foregoing functions. For example, the communication apparatus includes: a transceiver module, configured to receive first information, where the first information indicates whether a region or a beam in a cell allows access or camping; and a processing module, configured to determine, based on the first information, whether to access or camp on the cell.

In a possible implementation, the processing module is specifically configured to: when the first information indicates that a target region or a target beam allows access or camping, determine to access or camp on the cell, where the target region is a region in which the terminal is located in the cell, and the target beam is a beam on which the terminal is located in the cell.

In a possible implementation, the first information is cell barred indication information, and the cell barred indication information indicates whether the region or the beam in the cell is barred; or the first information is unified access control information.

In a possible implementation, when the first information is cell barred indication information, the transceiver module is further configured to receive second information, where the second information indicates whether the cell is barred; and the processing module is specifically configured to: when the second information indicates that the cell is not barred, determine, based on the first information, whether to access or camp on the cell.

In a possible implementation, when the first information is cell barred indication information, the first information includes identification information of a region or a beam that allows access or camping; or the first information includes identification information of a region or a beam that is barred from access or camping; or the first information indicates identification information of a region or a beam and whether the corresponding region or beam is barred; or the first information includes M bits, where the M bits respectively correspond to regions or beams in the cell, and all the M bits respectively indicate whether the corresponding regions or beams are barred.

In a possible implementation, when the first information is unified access control information, the transceiver module is further configured to receive unified access control information of the cell; and the processing module is specifically configured to determine, based on the first information and the unified access control information of the cell, whether access to or camping on the cell is allowed.

In a possible implementation, the first information includes identification information of the region or the beam in the cell and corresponding unified access control information.

In a possible implementation, the cell is a non-terrestrial network cell.

According to a fourth aspect, a communication apparatus is provided. The communication apparatus may be an access network device, or a chip or a system-on-a-chip in the access network device. The communication apparatus may implement functions performed by the access network device according to any one of the second aspect or the possible designs of the second aspect. The functions may be implemented by hardware, or may be implemented by hardware executing corresponding software. The hardware or software includes one or more modules corresponding to the foregoing functions. For example, the communication apparatus includes: a transceiver module, configured to send first information, where the first information indicates whether a region or a beam in a cell allows access or camping.

In a possible implementation, the communication apparatus further includes: a processing module, configured to determine first information.

In a possible implementation, the first information is cell barred indication information, and the cell barred indication information indicates whether the region or the beam in the cell is barred; or the first information is unified access control information.

In a possible implementation, when the first information is cell barred indication information, the transceiver module is further configured to send second information, where the second information indicates whether the cell is barred.

In a possible implementation, when the first information is cell barred indication information, the first information includes identification information of a region or a beam that allows access or camping; or the first information includes identification information of a region or a beam that is barred from access or camping; or the first information indicates identification information of a region or a beam and whether the corresponding region or beam is barred; or the first information includes M bits, where the M bits respectively correspond to regions or beams in the cell, and all the M bits respectively indicate whether the corresponding regions or beams are barred.

In a possible implementation, when the first information is unified access control information, the transceiver module is further configured to send unified access control information of the cell.

In a possible implementation, the first information includes identification information of the region or the beam in the cell and corresponding unified access control information.

In a possible implementation, when the first information indicates whether the beam in the cell allows access or camping, the first information includes set indication information, and the set indication information includes barred indication information respectively corresponding to different beams; and the transceiver module is specifically configured to send the set indication information on all beams. Alternatively, the first information includes a plurality of pieces of beam-level indication information, different beams corresponds to different beam-level indication information, and the beam-level indication information indicates whether a beam corresponding to the beam-level indication information allows access or camping. The transceiver module is specifically configured to send, to the beam, the beam-level indication information corresponding to the beam.

In a possible implementation, the cell is a non-terrestrial network cell.

According to a fifth aspect, this application provides a communication apparatus, where the communication apparatus includes a processor, and the processor is configured to perform the method in the first aspect or the second aspect. Further, the communication apparatus may further include a memory. The memory stores computer instructions, and the processor may run the computer instructions to perform the method according to the first aspect or the second aspect. Further, the communication apparatus may further include a transceiver, and the transceiver is configured to perform the method in the first aspect or the second aspect.

According to a sixth aspect, this application provides a computer-readable storage medium. The computer-readable storage medium stores computer instructions. When the computer instructions are run, the method according to the first aspect or the second aspect is performed.

According to a seventh aspect, this application provides a computer program product including instructions. When the computer program product is run on a computer, the computer is caused to perform the method according to the first aspect or the second aspect.

According to an eighth aspect, this application provides a chip. The chip includes a processor and a communication interface, and the processor and the communication interface are configured to support the chip in performing the method in the first aspect or the second aspect.

According to a ninth aspect, this application provides a communication system. The communication system includes a terminal and an access network device. The terminal is configured to perform the method in the first aspect, and the access network device is configured to perform the method in the second aspect.

For beneficial effect described in the third aspect to the ninth aspect of this application, refer to analysis of beneficial effect in the first aspect or the second aspect. Details are not described herein again.

### BRIEF DESCRIPTION OF DRAWINGS

FIG. 1 is a diagram of a transparent architecture according to an embodiment of this application;
FIG. 2 is a diagram of a regenerative architecture according to an embodiment of this application;
FIG. 3 is a diagram of a quasi-earth-fixed coverage scenario according to an embodiment of this application;
FIG. 4 is a diagram of an earth-moving coverage scenario according to an embodiment of this application;
FIG. 5 is a diagram of an NTN-dedicated cell bar mechanism according to an embodiment of this application;
FIG. 6 is a diagram of a 5G NR system architecture according to an embodiment of this application;
FIG. 7 is a diagram of a structure of a communication system according to an embodiment of this application;
FIG. 8 is a diagram of a structure of another communication system according to an embodiment of this application;
FIG. 9 is a diagram of a structure of another communication system according to an embodiment of this application;
FIG. 10 is a schematic flowchart of a communication method according to an embodiment of this application;
FIG. 11 is a diagram of a region-based indication scenario according to an embodiment of this application;
FIG. 12 is a diagram of another region-based indication scenario according to an embodiment of this application;
FIG. 13 is a diagram of a beam-based indication scenario according to an embodiment of this application;
FIG. 14 is a schematic flowchart of another communication method according to an embodiment of this application;
FIG. 15 is a schematic flowchart of another communication method according to an embodiment of this application;
FIG. 16 is a diagram of a structure of a communication apparatus according to an embodiment of this application;
FIG. 17 is a diagram of a structure of another communication apparatus according to an embodiment of this application; and
FIG. 18 is a diagram of a structure of another communication apparatus according to an embodiment of this application.

### DESCRIPTION OF EMBODIMENTS

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

It should be noted that, in the specification, claims, and accompanying drawings of this application, the terms "first", "second", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in embodiments of this application, "at least one (item)" means one or more, "a plurality of" means two or more, "at least two (items)" means two, three, or more, and "and/or" is used to describe an association relationship between associated objects and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural. It should be understood that in embodiments of this application, "B corresponding to A" indicates that B is associated with A. For example, B may be determined based on A. It should be further understood that determining B based on A does not mean that B is determined based only on A, and B may alternatively be determined based on A and/or other information. In addition, "connection" in embodiments of this application means various connection manners such as a direct connection or an indirect connection, for implementing communication between devices. This is not limited in embodiments of this application.

Unless otherwise specified, "transmission" (transmit/transmission) in embodiments of this application means bidirectional transmission, and includes a sending action and/or a receiving action. Specifically, "transmission" in embodiments of this application includes data sending, data receiving, or data sending and receiving. In other words, data transmission herein includes uplink data transmission and/or downlink data transmission. Data may include a channel and/or a signal. The uplink data transmission is uplink channel transmission and/or uplink signal transmission, and the downlink data transmission is downlink channel transmission and/or downlink signal transmission. In embodiments of this application, a "network" and a "system" express the same concept, and a communication system is a communication network.

Before embodiments of this application are described, some terms in embodiments of this application are explained.

An NTN is a general term for networks involving aerial objects, including a HAPS, a satellite communication network, and the like.

The HAPS is carried on an airborne platform, mainly including an aircraft, a balloon, and an airship. The HAPS uses a high altitude platform station as a mobile communication base station and provides a mobile service by using a same frequency band as a terrestrial mobile network.

The satellite communication network is based on a satellite-borne platform, mainly including a low earth orbit (low earth orbit, LEO) satellite, a medium earth orbit (medium earth orbit, MEO) satellite, and a geostationary earth orbit (geostationary earth orbit, GEO) satellite. Based on a relationship between a satellite and a base station, satellite communication networks can be classified into a transparent architecture (transparent payload) and a regenerative architecture (regenerative payload).

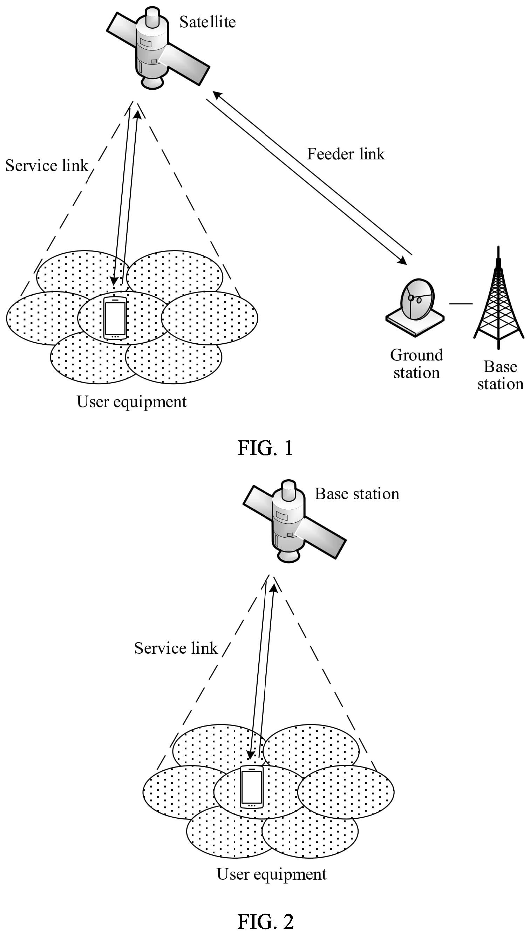

In the transparent architecture, the satellite is only responsible for signal forwarding and does not have a data processing capability. The base station (gNB) is located on the ground, and the satellite is connected to the base station through a ground gateway (gateway, also referred to as a ground station). Signal transmission between a user equipment (user equipment, UE) and the base station is performed through the satellite, and the base station still performs a data processing function. A transparent architecture scenario and a protocol stack are shown in FIG. 1. A link between the satellite and the UE is referred to as a service link (service link), and a link between the satellite and the base station is referred to as a feeder link (feeder link).

However, in the regenerative architecture, the satellite has all or a part of functions of the base station, in other words, the satellite may perform data processing. Specifically, there are two cases: The entire base station is located on the satellite; and a base station distributed unit (distributed unit, DU) is located on the satellite. A regenerative architecture scenario and a protocol stack are shown in FIG. 2. A link between the satellite/base station and a UE is referred to as a service link (service link).

In an NTN architecture, NTN cells may be classified into the following three types based on mobility characteristics of the NTN cells in a ground coverage area.

A first type is an earth-fixed (earth-fixed) cell: A coverage area of this type of NTN cell is fixed to a region on the ground, providing continuous fixed-point coverage. An NTN cell provided by a high elliptical orbit satellite (high elliptical orbit satellite, GEO) is of this type.

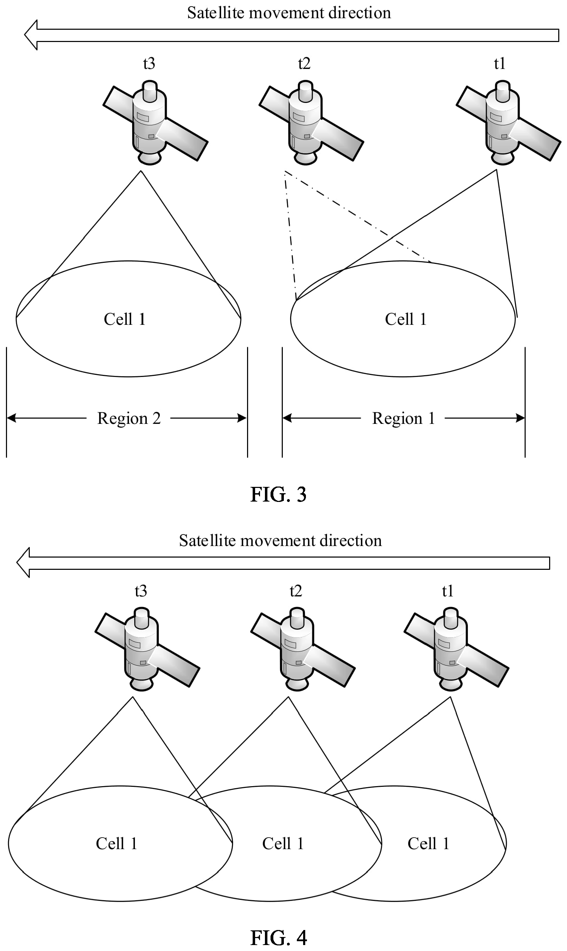

A second type is a quasi-earth-fixed (quasi-earth-fixed) cell: As shown in FIG. 3, a coverage area of this type of NTN cell is fixed to a region, that is, a region 1, on the ground within a time period t1 to t2, and is switched to another region, that is, a region 2, on the ground at t3, providing fixed-point coverage within a time period. A low earth orbit satellite (Low Earth Orbit Satellite, LEO) and a medium earth orbit satellite (medium earth orbit satellite, MEO) may provide this type of NTN cell.

A third type is an earth-moving (earth-moving) cell: As shown in FIG. 4, a coverage area of this type of NTN cell slides over the ground. The coverage area varies at different time t1, t2, and t3. An LEO and an MEO may provide this type of NTN cell.

In a communication scenario of a terrestrial cell, to control a quantity and types of UEs that access a base station, an access control (access control) rule is set to control the UE to access/camp on the terrestrial cell.

A cell bar (cell bar) mechanism is an access control rule. For load balancing, security, or testing purposes, an operator may control, by using a cell bar field broadcast by a cell, whether a UE can access or camp on the cell.

In a new radio/new radio (new radio, NR), a base station sends a cell barred indication field (cell Barred) in a master information block (master information block, MIB), where the field indicates whether a current cell is barred (barred) or not barred (not Barred). If a cell is barred, a UE in a radio resource control (radio resource control, RRC) idle state and an RRC inactive state cannot camp (camp) on the cell. In addition, the cell is no longer used as a candidate cell for cell reselection (cell reselection) within a specific time period.

To independently control access to the NTN cell and the terrestrial cell, dedicated cell bar field is introduced for the NTN cell to control whether to allow access of an NTN UE. The UE may distinguish between the terrestrial cell and the NTN cell based on the NTN-dedicated cell bar field.

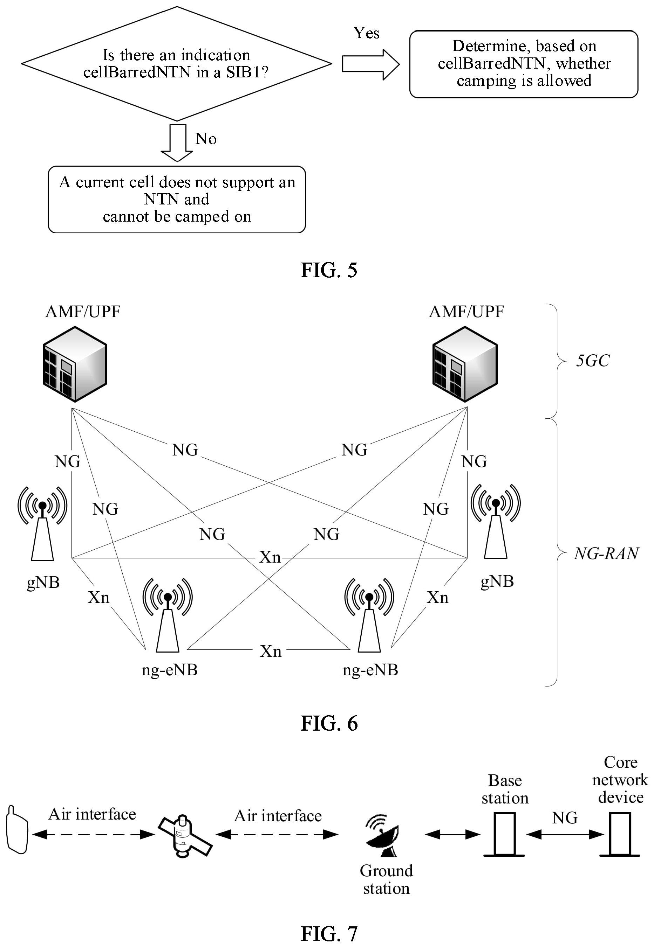

Specifically, as shown in FIG. 5, the NTN-dedicated cell bar field (cellBarredNTN) is introduced in a system information block 1 (System Information Block 1, SIB1) in an NTN-dedicated cell bar mechanism.

If a current cell does not broadcast cellBarredNTN, it indicates that the current cell does not support NTN access; or if the current cell broadcasts cellBarredNTN, the NTN UE determines, based on the field (barred/not Barred), whether to camp on the current cell.

It should be noted that, that the UE determines whether to access the NTN cell does not depend on the cell barred indication field (cellBarred) in the MIB.

In another example, another access control rule, that is, a unified access control (unified access control, UAC) mechanism, is further designed. Access control may be performed on UEs with different services and/or of different types according to the UAC mechanism, to balance load. Specifically, according to a policy of an operator, the UE determines, based on parameters (sent by a base station to the UE) related to an access identity (access identity, AI) and an access category (access category, AC) of the UE, whether an access attempt is allowed.

The AI represents an identity feature of a user, and an AI parameter is a parameter related to a type of the user. The AC represents an attribute of a service initiated by the user, and an AC parameter is a parameter related to a type of a service performed by the user. The AI parameter and the AC parameter may be sent by the base station through broadcasting in a SIB1.

The foregoing describes two NTN cell access control rules. When a UE is controlled, according to the NTN cell access control rule, to access an NTN cell, unified control is performed in a unit of cell, in other words, same access control information is used in the entire cell to control whether the UE can camp on or access the current NTN cell. In addition, the NTN cell has a wide coverage area. For example, a coverage area of one NTN cell may reach hundreds of thousands of square kilometers and span one or more provinces/cities or geographical regions. In a large coverage area, UE access control requirements are likely to be different. For example, load conditions in different provinces/cities or geographical regions are different. In an NTN cell, a region with higher load needs to be barred from UE access, and another region with lower load may be accessed by a UE. Regardless of whether the NTN cell uses the same access control information to control whether access is allowed or barred in all regions in the cell, communication in a part of regions in the NTN cell cannot be properly scheduled. The method of uniformly performing access control in the NTN cell has poor flexibility.

To resolve the foregoing technical problem, embodiments of this application provide a communication method. The following describes the method provided in embodiments of this application with reference to the accompanying drawings of this specification.

The communication method provided in embodiments of this application may be applied to various communication systems, for example, a long term evolution (long term evolution, LTE) system, a 5th generation (5th generation, 5G) mobile communication system, a wireless fidelity (wireless fidelity, Wi-Fi) system, a future communication system, or a system integrating a plurality of communication systems. This is not limited in embodiments of this application. 5G may also be referred to as new radio (new radio, NR).

For example, an embodiment of this application may be applied to a 5G NR system scenario. FIG. 6 is a diagram of a 5G NR system architecture. The 5G NR system includes a 5G core network (5G Core Network, 5GC), an access and mobility management function (Access and Mobility Management Function, AMF) network element, a user plane function (User Plane Function, UPF) network element, a 5G radio access network (NG-RAN), a 5G base station (gNB), and a 4G base station (ng-eNB) connected to the 5GC.

A serving base station gNB of UE is responsible for providing user plane and control plane protocol functions of 5G NR for the UE. A serving base station ng-eNB of the UE is responsible for providing user plane and control plane protocol functions of 4G-evolved universal terrestrial radio access (Evolved Universal Terrestrial Radio Access, E-UTRA) for the UE. Different base stations may exchange signaling, for example, handover signaling through an Xn interface. A base station and core network elements (an AMF and a UPF) communicate with each other in a wired or wireless manner, for example, through a next generation (next generation, NG) interface.

It should be noted that a base station in the 5G NR system may be located on the ground and connected to a satellite through a gateway. Alternatively, the base station may be directly located on a satellite. This is not limited.

The communication method provided in embodiments of this application may be applied to various communication scenarios, for example, may be applied to one or more of the following communication scenarios: enhanced mobile broadband (enhanced mobile broadband, eMBB), ultra reliable low latency communication (ultra reliable low latency communication, URLLC), machine type communication (machine type communication, MTC), massive machine type communications (massive machine type communication, mMTC), device to device (device to device, D2D), vehicle to everything (vehicle to everything, V2X), vehicle to vehicle (vehicle to vehicle, V2V), and an internet of things (internet of things, IoT).

The following describes a communication system provided in embodiments of this application. The communication system may include the following.

A terminal (terminal equipment) includes a mobile device that supports an air interface (where the air interface may be various types of air interfaces, for example, a 5G air interface), and may access a satellite network through the air interface and initiate a service such as a call or network access. The terminal may be a user equipment (user equipment, UE), a mobile station (mobile station, MS), a mobile terminal (mobile terminal, MT), or the like. Specifically, the terminal may be a mobile phone (mobile phone), a tablet computer, or a computer with a wireless transceiver function, or may be a virtual reality (virtual reality, VR) terminal, an augmented reality (augmented reality, AR) terminal, a wireless terminal in industrial control, a wireless terminal in self-driving, a wireless terminal in telemedicine, a wireless terminal in a smart grid, a wireless terminal in a smart city (smart city), a smart home, a vehicle-mounted terminal, or the like. In this embodiment of this application, an apparatus configured to implement a function of a terminal device may be a terminal, or may be an apparatus, for example, a chip system, that can support a terminal in implementing the function. The apparatus may be installed in the terminal or used in combination with the terminal. In this embodiment of this application, an example in which a terminal is a UE is used to describe a communication system.

An access network device may be configured to implement at least one of functions of a terminal, such as resource scheduling, radio resource management, and radio resource control. The access network device may be an access network device in the 3rd generation partnership project (3rd generation partnership project, 3GPP), for example, an access network device in a 4G network, a 5G network, or a future-oriented 6G network. The access network device may alternatively be an access network device of an open access network (open RAN, O-RAN, or ORAN), a cloud radio access network (cloud radio access network, CRAN), or two or more of the foregoing networks. Specifically, the access network device may include any node of a base station, a wireless access point, a transmission reception point (transmission reception point, TRP), a transmission point (transmission point, TP), and another access node. The access network device may alternatively be a module or unit that completes a part of functions of the base station, for example, a central unit (central unit, CU), a distributed unit (distributed unit, DU), or a radio unit (radio unit, RU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all functions of a physical layer. For detailed descriptions of the foregoing protocol layers, refer to technical specifications related to the 3rd generation partnership project (3rd generation partnership project, 3GPP). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may alternatively have different names, but a person skilled in the art may understand meanings of the names. For example, in an ORAN system, a CU may also be referred to as an O-CU (open CU), a DU may also be referred to as an O-DU, and an RU may also be referred to as an O-RU. Any one of the CU (or the CU-CP or the CU-UP), the DU, and the RU in this application may be implemented by using a software module, a hardware module, or a combination of a software module and a hardware module. The access network device and a core network device communicate with each other in a wired or wireless manner, for example, through a next generation (next generation, NG) interface. Different access network devices may exchange signaling, for example, handover signaling, through an Xn interface. In this embodiment of this application, an apparatus configured to implement a function of the access network device may be an access network device; or may be an apparatus, for example, a chip system, that can support the access network device in implementing the function. The apparatus may be installed in the access network device or used in combination with the access network device. In this embodiment of this application, an example in which the access network device is a base station is used to describe a communication system.

A core network device is responsible for maintaining subscription data of a mobile network, and provides functions such as session management, mobility management, policy management, and security authentication for a terminal. The core network device may include the following network elements: a UPF, an authentication service function (authentication server function, AUSF), an AMF, a session management function (session management function, SMF), a network exposure function (network exposure function, NEF), a network function repository function (network function repository function, NRF), a policy control function (policy control function, PCF), and unified data management (unified data management, UDM), and optionally, may further include an application function (application function, AF) and a unified data repository (Unified Data Repository, UDR). For descriptions of the foregoing network elements, refer to conventional technologies. Details are not described.

A ground station (ground station) is a component of a satellite or a space system. In other words, the ground station is a ground device that is disposed on the earth for space communication. The ground station generally refers to a ground device that is installed on the surface of the earth (including on ships and aircraft) for satellite communication. The ground station mainly includes a high-gain antenna system that can trace an artificial satellite, a highpower microwave transmission system, a low-noise receiving system, a power supply system, and the like. In addition, the ground station is responsible for forwarding signaling and service data between an access network device and a core network device.

In an embodiment, as shown in FIG. 7, in a communication system, a base station may be deployed on the ground and communicatively connected to a ground station, to send and receive signaling and service data.

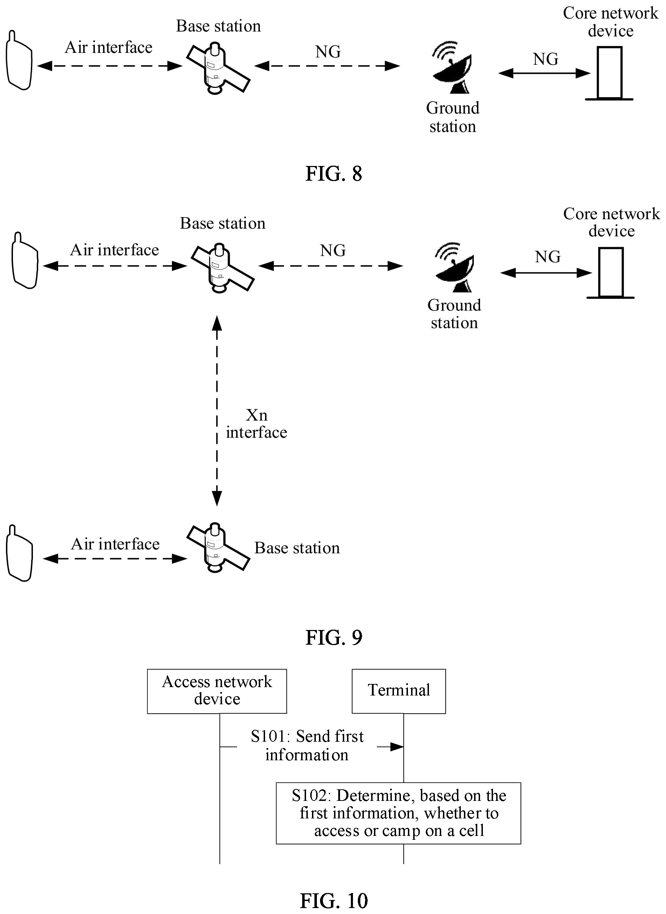

In an embodiment, as shown in FIG. 8, in a communication system, a base station may be deployed on a satellite and communicatively connected to a ground station through a radio link, to send and receive signaling and service data.

In an embodiment, as shown in FIG. 9, in a communication system, a base station may be deployed on a satellite, and signaling exchange and user data transmission may be performed between base stations on different satellites through an Xn interface.

It should be noted that FIG. 7, FIG. 8, and FIG. 9 are merely example framework diagrams. A quantity of included nodes and a state of a terminal are not limited. In addition to function nodes shown in FIG. 7, FIG. 8, and FIG. 9, other nodes such as a gateway device and an application server may be further included. This is not limited.

Based on the communication system provided in embodiments of this application, an embodiment of this application further provides a communication method. FIG. 10 is a schematic flowchart of a communication method according to an embodiment of this application. As shown in FIG. 10, the method may include the following steps.

S101: An access network device sends first information to a terminal. Correspondingly, the terminal receives the first information.

The first information indicates whether a region or a beam in a cell allows access or camping. The first information may be cell barred indication information, and the cell barred indication information indicates whether the region or the beam in the cell is barred. "Barred" may be understood as not allowing the terminal to camp on or access the region or the beam, and "not barred" may be understood as allowing the terminal to camp on or access the region or the beam. In other words, "not barred" means that the terminal is allowed to perform access or camping, and "barred" means that the terminal is not allowed to perform access or camping. Alternatively, the first information may be UAC information (or referred to as a UAC parameter). The first information may be carried in system information for sending. For example, the first information is carried in a SIB 1 or SIB1bis. This is not limited.

The following describes, after S102 is described, several possible designs of the first information when the first information is cell barred indication information.

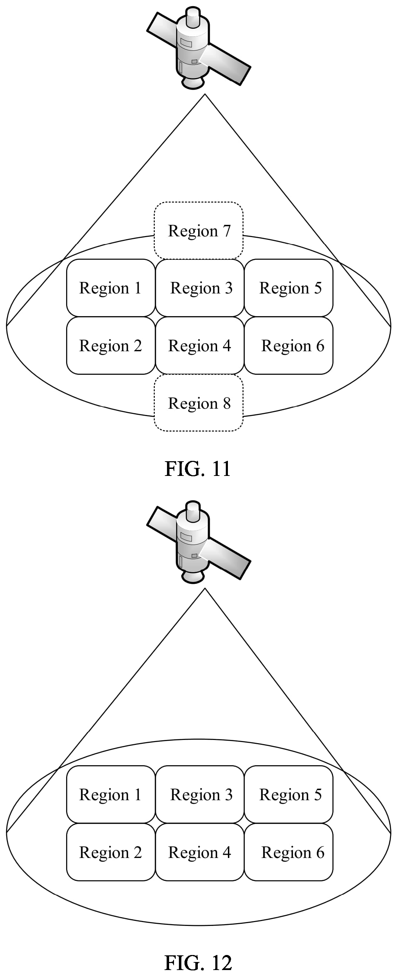

It should be noted that, due to practical differences, one region is not necessarily completely included in one cell. For example, region division may be performed based on a geographical attribute, and a coverage area of a cell is not determined based on the geographical attribute. Therefore, the cell may cover a part of a region, and cannot cover the entire region. For example, as shown in FIG. 11, a region 1 to a region 6 are completely covered by a cell, and a region 7 and a region 8 are not completely covered by the cell. For the regions that are not completely covered by the cell, the access network device may also provide the first information for terminals located in these regions.

In addition, a region covered by a cell may also change. For example, a cell covers the region 1 to the region 6 within a specific time period, and may cover a region 10 to a region 20 within another time period.

S102: The terminal determines, based on the first information, whether to access or camp on the cell.

After receiving the first information, the terminal may determine whether to access or camp on the cell. Specifically, when the first information indicates that a target region in which the terminal is located in the cell or a target beam on which the terminal is located in the cell allows access or camping, the terminal determines that the cell can be accessed or camped on (after determining that the cell can be accessed or camped on, the terminal may access or camp on the cell, or may not access or camp on the cell). Otherwise, the terminal determines not to access or camp on the cell. Region division may be predefined, or may be determined based on region information provided by the access network device for the terminal in advance. Corresponding identification information may be configured for a region to identify the region. The target region may be a region in which the terminal is located, and the target beam may be an optimal beam or a serving beam (serving beam) determined by the terminal. For the optimal beam or the serving beam, the terminal may obtain the optimal beam/serving beam based on a measurement result of a beam reference signal. For example, the beam reference signal is a synchronization signal block (synchronization signal/PBCH block, SSB). The terminal obtains SSB quality: reference signal received power (reference signal received power, RSRP), reference signal received quality (reference signal received quality, RSRQ), or the like. The terminal may select a beam with optimal quality or quality that meets a specific condition as the optimal beam/serving beam.

In this embodiment of this application, the access network device sends, to the terminal, the first information indicating whether the region or the beam in the cell allows access or camping. The terminal may perform access determining at a region granularity or a beam granularity based on the first information, so that high-precision cell access or camping control is implemented, and flexibility of cell access or camping control is high.

In an embodiment, the first information includes identification information of a region or a beam that allows access or camping.

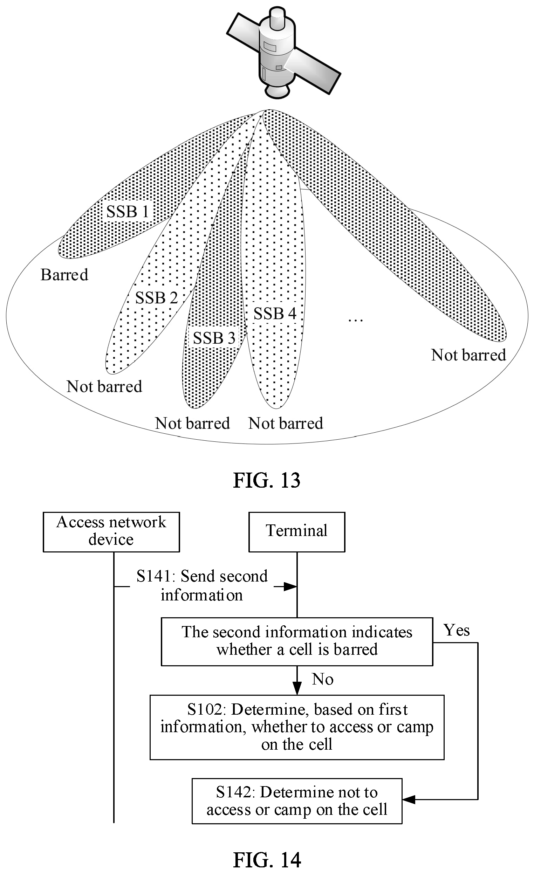

In a scenario in which the first information includes the identification information of the region that allows access or camping, for example, as shown in FIG. 12, a cell includes a region 1 to a region 6. The region 1 to the region 3 allow access or camping, and the region 4 to the region 6 are barred from access or camping. In this case, the first information includes identification information of the region 1 to the region 3. Assuming that the terminal is located in one of the region 1, the region 2, or the region 3, it is determined that access to or camping on the cell is allowed. In a scenario in which the first information includes the identification information of the beam that allows access or camping, for example, as shown in FIG. 13, a cell includes a plurality of beams such as an SSB 1 to an SSB 4 (where in this embodiment of this application, a beam reference signal represents a beam, for example, the beam reference signal is an SSB). The SSB 1 is barred from access or camping, and the SSB 2 to the SSB 4 allow access or camping. In this case, the first information includes identification information of the beams such as the SSB 2 to the SSB 4. Assuming that the optimal beam or the serving beam of the terminal is one of the SSB 2 to the SSB 4, it is determined that access to or camping on the cell is allowed.

In this embodiment of this application, the first information includes only the identification information of the region or the beam that allows access or camping, so that overheads needed for transmitting the first information is low.

In an embodiment, the first information includes identification information of a region or a beam that is barred from access or camping.

In a scenario in which the first information includes the identification information of the region that is barred from access or camping, such as the scenario shown in FIG. 12, the first information includes identification information of the region 4 to the region 6 (which are barred from access or camping). Assuming that the terminal is located in one of the region 4 to the region 6, it is determined that access to or camping on the cell is barred. In a scenario in which the first information includes the identification information of the beam that is barred from access or camping, such as the scenario shown in FIG. 13, the first information includes identification information of the SSB 1 (which is barred from access or camping). Assuming that the optimal beam or the serving beam of the terminal is the SSB 1, it is determined that access to or camping on the cell is barred.

In this embodiment of this application, the first information includes only the identification information of the region or the beam that is barred from access or camping, so that overheads needed for transmitting the first information is low.

In an embodiment, the first information indicates identification information of a region or a beam and whether the corresponding region or beam is barred.

In a scenario in which the first information indicates a region, such as the scenario shown in FIG. 12, the first information includes the identification information of the region 1 to the region 6 and indication information indicating whether a corresponding region is barred. For example, the first information may be represented as a region index and the indication information indicating whether the corresponding region is barred. For example, the indication information indicating whether the region is barred may use a cell barred indication field (cell Barred) in a cell bar (cell bar) mechanism, where the field indicates that the corresponding region is barred (barred) or not barred (not Barred). In a scenario in which the first information indicates a beam, such as the scenario shown in FIG. 13, the first information includes the identification information of the beams such as the SSB 1 to the SSB 4 and indication information indicating whether a corresponding beam is barred. For example, the first information may be represented as an SSB index and corresponding cell barred.

In this embodiment of this application, the first information indicates the identification information of the region or the beam and whether the corresponding region or beam is barred, so that an indication, of whether the region or the beam is barred, indicated by the first information is more comprehensive.

In an embodiment, the first information includes M bits, where the M bits respectively correspond to regions or beams in the cell, and all the M bits respectively indicate whether the corresponding regions or beams are barred.

A specific bit in the first information corresponding to a specific region or beam may be pre-agreed between the terminal and the access network device (or may be specified in a protocol). Each bit in the first information may correspond to one or more regions (or beams). For example, the first information may be a bitmap (bitmap). In a scenario in which the first information indicates a region, such as the scenario shown in FIG. 12, there are six regions. Assuming that each bit corresponds to one region, M is 6, and the first information may be 111000. It is pre-agreed between the terminal and the access network device that a 1^{st} bit to a 6^{th} bit in the first information respectively correspond to the region 1 to the region 6. 1 indicates that access or camping is allowed, and 0 indicates that access or camping is not allowed. In this case, based on the first information 111000, the terminal may determine that the region 1 to the region 3 allow access or camping, and that the region 4 to the region 6 are barred from access or camping. Assuming that the terminal is located in the region 1, the region 2, or the region 3, it is determined that access or camping is allowed.

In another example, if each bit corresponds to three regions, M is 2, and the first information may be 10. It is pre-agreed between the terminal and the access network device (or specified in a protocol) that a 1^{st} bit in the first information corresponds to the region 1 to the region 3, and a 2^{nd} bit corresponds to the region 4 to the region 6. 1 indicates that access or camping is allowed, and 0 indicates that access or camping is not allowed. In this case, based on the first information 10, the terminal may determine that the region 1 to the region 3 allow access or camping, and that the region 4 to the region 6 are barred from access or camping.

In still another example, a part of bits corresponds to one region, and the remaining bits corresponds to a plurality of regions. For example, M is 4, a 1^{st} bit corresponds to the regions 1 to 3, a 2^{nd} bit corresponds to the region 4, a 3^{rd} bit corresponds to the region 5, and a 4^{th} bit corresponds to the region 6.

It may be understood that the foregoing correspondence between a bit and a region is an example for description. In actual application, another correspondence between a bit and a region may be flexibly set. This is not limited.

In this embodiment of this application, each bit in the first information corresponds to a region or a beam, and whether the corresponding region or beam is barred is indicated based on information carried in each bit, so that whether a global region or beam is barred can be indicated with low overheads needed for first signaling.

In an embodiment, when the first information is cell barred indication information, as shown in FIG. 14, the method may further include the following steps.

S141: The access network device sends second information to the terminal. Correspondingly, the terminal receives the second information.

The second information indicates whether the cell is barred. The second information may be a cell-level NTN cell bar field. When the second information indicates that the cell is not barred, whether to access or camp on the cell is determined based on the first information.

For example, due to practical differences, the second information may be set to barred (indicating that the cell is barred) or not barred (indicating that the cell is not barred). When the second information is set to not barred, it indicates that there is an unbarred region/beam in the NTN cell. In this case, the terminal then performs S102. However, when the second information is set to barred, the entire NTN cell is barred from UE camping or access. In this case, the terminal does not need to determine, based on the first information, whether to access or camp on the cell, but directly determines not to access or camp on the cell (S142).

In this embodiment of this application, whether the cell is barred is indicated based on the second information, and when the second information indicates that the cell is not barred, the terminal determines, based on the first information, whether to access or camp on the cell, so that operation complexity of the terminal can be reduced.

In an embodiment, after S141, the method may further include:

The terminal determines, based on the first information and the second information, whether to access or camp on the cell.

The first information and the second information may be jointly used to determine whether access or camping is allowed. For example, the first information may be set to barred (indicating that the cell is barred) or not barred (indicating that the cell is not barred). Similarly, the second information may also be set to barred (indicating that the cell is barred) or not barred (indicating that the cell is not barred). In this case, there are four combinations.

If both the first information and the second information are set to "barred", it indicates that access or camping is barred.

If both the first information and the second information are set to "not barred", it indicates that access or camping is allowed.

When one of the first information and the second information is set to "barred", and the other one is set to "not barred", whether to perform access or camping may be determined according to the following several examples of rules.

In an example, regardless of whether the first information indicates "barred" and the second information indicates "not barred", or the first information indicates "not barred" and the second information indicates "barred", the terminal does not access/camp on the cell within a specific time period T0. The time period T0 may be pre-agreed between the terminal and the access network device (or specified in a protocol).

In another example, the first information indicates "barred", and the second information indicates "not barred". The terminal does not access/camp on the cell within a time period T1. When the second information indicates "barred" and the first information indicates "not barred", the terminal does not access/camp on the cell within a time period T2. T1 is different from T2, and the time periods T1 and T2 may be pre-agreed between the terminal and the access network device (or specified in a protocol).

In still another example, when the first information and the second information indicate different indications, whether to access or camp on the cell may be determined based on factors such as a UE type, UE mobility, and a UE capability.

In this embodiment, the first information may be carried in a MIB (for example, a cell bar field in the MIB), and the second information may be carried in a SIB1 (for example, an NTN cell bar field in the SIB1).

In this embodiment of this application, whether the cell is barred is jointly indicated by the first information and second information, so that flexibility of access/camping control is improved.

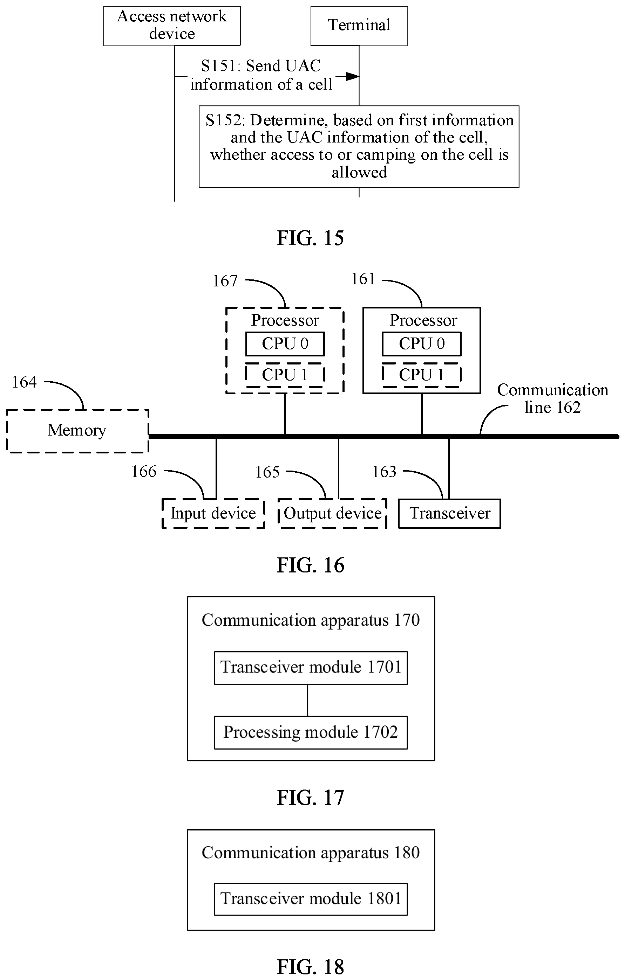

In an embodiment, when the first information is UAC information, as shown in FIG. 15, the method further includes the following steps.

S151: The access network device sends UAC information of the cell to the terminal. Correspondingly, the terminal receives the UAC information of the cell.

With reference to the descriptions of the unified access control UAC information in embodiments of this application, the UAC information of the cell indicates UAC information corresponding to an AC and an AI, and can be used to control to allow a terminal with a specific service and/or of a specific type to access the cell. The first information includes identification information of the region or the beam in the cell and corresponding UAC information, for example, includes a region index (or an SSB index) and the corresponding UAC information. The UAC information of the cell may be consistent with some UAC information in the first information. In this case, the first information sent by the access network device no longer includes UAC information that is consistent with the UAC information of the cell. The terminal may determine, based on the UAC information of the cell, UAC information that is missing in the first information, to reduce signaling overheads of the first information.

For a UAC parameter that is in the UAC information in the first information and that is inconsistent with a UAC parameter of the same type in the UAC information of the cell, or a UAC parameter of the same type that exists in the first information but does not exist in the UAC information of the cell, the access network device sends the UAC parameter to the terminal.

For example, the UAC information of the cell includes the following parameters: uac-BarringForCommon and uac-BarringInfoSetList. In addition, the access network device determines that UAC of a region (or a beam) in the cell includes uac-BarringForCommon, uac-BarringInfoSetList, and uac-BarringPerPLMN-List. By comparison, the first two types of parameters are of the same type. It is assumed that content of the first two types of parameters is the same, and a third-type parameter exists in the UAC information of the region (or the beam), but does not exist in the UAC information of the cell. In this case, first information of the region (or the beam) includes the third-type parameter. In this scenario, the terminal determines, by using the third-type parameter in the first information and a first-type parameter and a second-type parameter in the UAC parameters of the cell, whether to access/camp on the cell.

In another example, the first two types of parameters are of the same type. It is assumed that content of a first-type parameter in the UAC information of the region or the beam is different from content of a first-type parameter in the UAC information of the cell, and a third-type parameter exists in the UAC information of the region (or the beam), but does not exist in the UAC information of the cell. In this case, the first information of the region (or the beam) includes the first-type parameter and the third-type parameter. In this scenario, the terminal determines, by using the first-type parameter and the third-type parameter in the first information and a second-type parameter in the UAC information of the cell, whether to access or camp on the cell.

In still another example, the first two types of parameters are of the same type. It is assumed that content of a first-type parameter in the UAC information of the region or the beam is different from content of a first-type parameter in the UAC information of the cell, content of second-type parameters are also different, and a third-type parameter exists in the UAC information of the region (or the beam), but does not exist in the UAC information of the cell. In this case, the first information of the region (or the beam) includes the first-type parameter, the second-type parameter, and the third-type parameter. In this scenario, the terminal determines, by using the first-type parameter, the second-type parameter, and the third-type parameter in the first information, whether to access or camp on the cell.

S152: The terminal determines, based on the first information and the UAC information of the cell, whether access to or camping on the cell is allowed.

When the terminal determines whether access to or camping on the cell is allowed, UAC information of a same type in the UAC information of the cell may be used for a UAC information type that is not carried in the first information. For the UAC information of the same type, if the UAC information in the first information is inconsistent with the UAC information of the cell, the terminal determines, based on the UAC information in the first information, whether access to or camping on the cell is allowed.

In other words, S152 is introduced only in a scenario in which some UAC information in the UAC information of the cell is consistent with UAC information of the same type in the first information. In a scenario in which the UAC information of the cell is completely inconsistent with the UAC information in the first information, the access network device sends, in the first information to the terminal, identification information of all regions or all beams in the cell and corresponding UAC information, and determines, only based on the first information, whether access to or camping on the cell is allowed. In other words, the steps in the embodiment shown in FIG. 10 are used to determine whether access to or camping on the cell is allowed.

In this embodiment of this application, the UAC information of the cell is received, and whether access to or camping on the cell is allowed is determined based on the first information and the UAC information of the cell, so that sending of repeated information in the UAC information of the cell and the first information is reduced, and signaling overheads are reduced.

In an embodiment, in a scenario in which the first information indicates whether the beam in the cell allows access or camping, S101 (that is, the access network device sends the first information to the terminal) may include:

The access network device sends same set indication information on each beam. Correspondingly, the terminal receives the set indication information.

The first information includes the set indication information, and the set indication information indicates whether different beams allow access or camping on the cell. In other words, the set indication information can provide information about whether all beams allow access or camping. The set indication information may directly indicate whether all the beams allow access or camping. For example, the foregoing embodiment describes a design in which the first information indicates the identification information of the region or the beam and whether the corresponding region or beam is barred. Alternatively, there is a design in which the first information may include M bits, where the M bits respectively correspond to regions or beams in the cell, and all the M bits respectively indicate whether the corresponding regions or beams are barred. In the foregoing two designs, whether all the beams allow access or camping is indicated.

In another example, the set indication information may further indicate whether a part of beams allows access or camping, to implement a function of indicating whether all the beams allow access or camping. For example, the foregoing embodiment describes a design in which the first information includes the identification information of the region or the beam that is barred from access or camping. In this design, the terminal may determine that a region or a beam that is not included in the first information allows access. Similarly, there is also a design in which the first information further includes the identification information of the region or the beam that allows access or camping. In this design, the terminal may determine that a region or a beam that is not included in the first information is barred from access. For the two designs, the set indication information only needs to indicate whether a part of beams allows access or camping.

In this embodiment of this application, the same first information is sent on each beam, and system information corresponding to different beams is consistent, so that the terminal can implement cross-beam system information combination, to obtain a combination gain.

In an embodiment, similarly, in a scenario in which the first information indicates whether the beam in the cell allows access or camping, S101 (that is, the access network device sends the first information to the terminal) may further include:

The access network device sends, on the beam, beam-level indication information corresponding to the beam. Correspondingly, the terminal receives the beam-level indication information.

The first information is beam-level indication information, different beams correspond to different beam-level indication information, and the beam-level indication information indicates whether a beam corresponding to the beam-level indication information allows access or camping. In other words, the beam-level indication information can only indicate whether the corresponding beam allows access or camping. In this case, the beam-level indication information corresponding to the beam is sent on the beam. The terminal can receive beam-level indication information of a beam on which the terminal is located, and determine, based on the beam-level indication information, whether access to/camping on the cell is allowed (the terminal may also receive beam-level indication information of an adjacent beam of the beam on which the terminal is located, and in this case, the terminal may determine, based on beam-level indication information of the optimal beam/serving beam, to access or camp on the cell). For example, first information sent on a beam 1 includes a message indicating whether the beam 1 is barred, first information sent on a beam 2 includes a message indicating whether the beam 2 is barred, and so on. First information sent on different beams is independent.

In this embodiment of this application, the access network device sends, on a beam, beam-level indication information corresponding to the beam, so that an access/camping indication at a beam granularity can be implemented.

With reference to the descriptions of the foregoing embodiments of this application, it can be easily learned that, in this application, to improve flexibility of a cell access/camping indication, a corresponding communication method is designed for a possible indication granularity division mechanism (region-based division or beam-based division) and a possible form (cell bar or UAC information) of high-granularity access/camping indication information indicated by the access network device to the terminal, so that high-precision cell access or camping control is implemented. Specifically, different regions/beams are distinguished, and different cell barred indication information (or UAC information) is configured, so that whether a terminal in a related region can camp on/access a cell is accurately controlled based on load or another requirement in an actual geographic region, to avoid an unnecessary access restriction on a terminal in an unrelated region, improve flexibility of cell access or camping control, and further optimize user experience.

It should be understood that in the foregoing embodiments, the terminal device and/or the access network device may perform a part or all of the steps in embodiments. These steps or operations are merely examples. Another operation or variations of various operations may be further performed in embodiments of this application. In addition, the steps may be performed in a sequence different from a sequence shown in embodiments, and not all of operations in embodiments of this application may be performed. In addition, sequence numbers of the steps do not mean an execution sequence. An execution sequence of the processes should be determined based on functions and internal logic of the processes, and should not constitute any limitation on the implementation processes of embodiments of this application.

The foregoing mainly describes the solutions provided in embodiments of this application from a perspective of execution logic of each step. It can be understood that, to implement the foregoing functions, each node, for example, the terminal, includes a corresponding hardware structure and/or software module for performing the functions. A person skilled in the art should easily be aware that, in combination with algorithm steps of the examples described in embodiments disclosed in this specification, the methods in embodiments of this application can be implemented by hardware, software, or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal or the access network device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

During specific implementation, network elements shown in this application, for example, the terminal, may use a composition structure shown in FIG. 16 or include components shown in FIG. 16. FIG. 16 is a diagram of a structure of a communication apparatus according to an embodiment of this application. When the communication apparatus has the functions of the terminal in embodiments of this application, the communication apparatus may be a terminal, or a chip or a system-on-a-chip in the terminal. When the communication apparatus has the function of the access network device in embodiments of this application, the communication apparatus may be an access network device, or a chip or a system-on-a-chip in the access network device.

As shown in FIG. 16, the communication apparatus may include a processor 161. Optionally, the communication apparatus may further include a communication line 162, a transceiver 163, and a memory 164. The processor 161, the memory 164, and the transceiver 163 may be connected through the communication line 162. In an example, the processor 161 may include one or more CPUs, for example, a CPU 0 and a CPU 1 in FIG. 16.

In an optional implementation, the communication apparatus includes a plurality of processors. For example, the communication apparatus may further include a processor 167 in addition to the processor 161 in FIG. 16.

The processor 161 is configured to perform the communication method provided in embodiments of this application. The processor 161 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 161 may be another apparatus having a processing function, for example, a circuit, a component, or a software module.

The communication line 162 is configured to transfer information between the components included in the communication apparatus.

The transceiver 163 is configured to communicate with another device or another communication network. The another communication network may be an ethernet, a radio access network (radio access network, RAN), a wireless local area network (wireless local area network, WLAN), or the like. The transceiver 163 may be an interface circuit, a pin, a radio frequency module, a transceiver, or any apparatus that can implement communication.

Further, the communication apparatus may include the memory 164. The memory 164 is configured to store instructions. The instructions may be computer programs.

The memory 164 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another optical disk storage, an optical disc storage, a magnetic disk storage medium, or another magnetic storage device. The optical disc storage includes a compressed optical disc, a laser disc, an optical disc, a digital versatile disc, a Blu-ray disc, or the like.

It should be noted that the memory 164 may exist independently of the processor 161, or may be integrated with the processor 161. The memory 164 may be configured to store instructions, program code, some data, or the like. The memory 164 may be located inside the communication apparatus, or may be located outside the communication apparatus. This is not limited. When executing the instructions stored in the memory 164, the processor 161 may implement the method provided in embodiments of this application.

In an optional implementation, the communication apparatus further includes an output device 165 and an input device 166. For example, the input device 166 is a device, for example, a keyboard, a mouse, a microphone, or a joystick, and the output device 165 is a device, for example, a display or a speaker (speaker).

It should be noted that the communication apparatus may be a desktop computer, a portable computer, a network server, a mobile phone, a tablet computer, a wireless terminal, an embedded device, a chip system, or a device having a structure similar to that in FIG. 16. In addition, a composition structure shown in FIG. 16 does not constitute a limitation on the communication apparatus. In addition to the components shown in FIG. 16, the communication apparatus may include more or fewer components than those shown in the figure, or some components may be combined, or different component arrangements may be used.

In this embodiment of this application, the chip system may include a chip, or may include a chip and another discrete component.

FIG. 17 shows a communication apparatus 170 according to an embodiment of this application. The communication apparatus may be a terminal, a chip or a system-on-a-chip in the terminal. The communication apparatus may implement functions performed by the terminal in embodiments of this application, and implement corresponding beneficial effects. The functions may be implemented by hardware, or may be implemented by hardware executing corresponding software. The hardware or software includes one or more modules corresponding to the foregoing functions. For example, the communication apparatus includes:
a transceiver module 1701, configured to receive first information, where the first information indicates whether a region or a beam in a cell allows access or camping; and a processing module 1702, configured to determine, based on the first information, whether to access or camp on a cell.

In an embodiment, the processing module 1702 is specifically configured to: when the first information indicates that a target region or a target beam allows access or camping, determine to access or camp on the cell, where the target region is a region in which the terminal is located in the cell, and the target beam is a beam on which the terminal is located in the cell.

In an embodiment, the first information is cell barred indication information, and the cell barred indication information indicates whether the region or the beam in the cell is barred, or the first information is unified access control information.

In an embodiment, when the first information is cell barred indication information, the transceiver module 1701 is further configured to receive second information, where the second information indicates whether the cell is barred; and the processing module 1702 is specifically configured to: when the second information indicates that the cell is not barred, determine, based on the first information, whether to access or camp on the cell.

In an embodiment, when the first information is cell barred indication information, the first information includes identification information of a region or a beam that allows access or camping; or the first information includes identification information of a region or a beam that is barred from access or camping; or the first information indicates identification information of a region or a beam and whether the corresponding region or beam is barred; or the first information includes M bits, where the M bits respectively correspond to regions or beams in the cell, and all the M bits respectively indicate whether the corresponding regions or beams are barred.

In an embodiment, when the first information is unified access control information, the transceiver module 1701 is further configured to receive unified access control information of the cell; and the processing module 1702 is specifically configured to determine, based on the first information and the unified access control information of the cell, whether access to or camping on the cell is allowed.

In an embodiment, the first information includes identification information of a region or a beam in the cell and corresponding unified access control information.

In an embodiment, the cell is a non-terrestrial network cell.

FIG. 18 shows a communication apparatus 180 according to an embodiment of this application. The communication apparatus may be an access network device, a chip or a system-on-a-chip in the access network device. The communication apparatus may implement functions performed by the access network device in embodiments of this application, and implement corresponding beneficial effects. The functions may be implemented by hardware, or may be implemented by hardware executing corresponding software. The hardware or software includes one or more modules corresponding to the foregoing functions. For example, the communication apparatus includes:
a transceiver module 1801 is configured to send first information, where the first information indicates whether a region or a beam in a cell allows access or camping.

In an embodiment, the first information is cell barred indication information, and the cell barred indication information indicates whether the region or the beam in the cell is barred, or the first information is unified access control information.

In an embodiment, when the first information is cell barred indication information, the transceiver module 1801 is further configured to send second information, where the second information indicates whether the cell is barred.

In an embodiment, when the first information is cell barred indication information, the first information includes identification information of a region or a beam that allows access or camping; or the first information includes identification information of a region or a beam that is barred from access or camping; or the first information indicates identification information of a region or a beam and whether the corresponding region or beam is barred; or the first information includes M bits, where the M bits respectively correspond to regions or beams in the cell, and all the M bits respectively indicate whether the corresponding regions or beams are barred.

In an embodiment, when the first information is unified access control information, the transceiver module 1801 is further configured to send unified access control information of the cell.

In an embodiment, the first information includes identification information of a region or a beam in the cell and corresponding unified access control information.

In an embodiment, when the first information indicates whether the beam in the cell allows access or camping, the first information includes set indication information, and the set indication information includes barred indication information respectively corresponding to different beams; and the transceiver module 1801 is specifically configured to send the set indication information on all beams. Alternatively, the first information includes a plurality of pieces of beam-level indication information, different beams correspond to different beam-level indication information, and the beam-level indication information indicates whether a beam corresponding to the beam-level indication information allows access or camping. The transceiver module 1801 is specifically configured to send, to the beam, the beam-level indication information corresponding to the beam.

In an embodiment, the cell is a non-terrestrial network cell.

An embodiment of this application further provides a computer-readable storage medium. All or a part of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit of the terminal apparatus according to any one of the foregoing embodiments, for example, including a data transmit end and/or a data receive end. For example, the computer-readable storage medium may be a hard disk drive or a memory of the terminal apparatus. The computer-readable storage medium may alternatively be an external storage device of the terminal apparatus, for example, a plug-in hard disk drive, a smart media card (smart media card, SMC), a secure digital (secure digital, SD) card, or a flash card (flash card) that is configured on the terminal apparatus. Further, the computer-readable storage medium may include both an internal storage unit and an external storage device of the terminal apparatus. The computer-readable storage medium is configured to store the computer program and other programs and data that are needed by the terminal apparatus. The computer-readable storage medium may be further configured to temporarily store data that has been output or is to be output.

An embodiment of this application further provides computer instructions. All or a part of the procedures in the foregoing method embodiments may be completed by computer instructions instructing relevant hardware (for example, a computer, a processor, an access network device, and a terminal). The program may be stored in the foregoing computer-readable storage medium.

An embodiment of this application further provides a chip system. The chip system may include a chip, or may include a chip and another discrete component. This is not limited. The chip system includes a processor and a transceiver. All or a part of the procedures in the foregoing method embodiments may be completed by the chip system. For example, the chip system may be configured to implement the functions performed by the terminal or the access network device in the foregoing method embodiments.

In a possible design, the chip system further includes a memory. The memory is configured to store program instructions and/or data. When the chip system runs, the processor executes the program instructions stored in the memory, so that the chip system performs the functions performed by the terminal or the access network device in the foregoing method embodiments.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a nonvolatile memory, such as a hard disk drive (hard disk drive, HDD) or a solid-state drive (solid-state drive, SSD), or may be a volatile memory (volatile memory), such as a random access memory (random access memory, RAM). The memory is any other medium that can carry or store expected program code in a form of an instruction or a data structure and that can be accessed by a computer, but is not limited thereto. Alternatively, the memory in embodiments of this application may be a circuit or any other apparatus that can implement a storage function, and is configured to store instructions and/or data.

The foregoing descriptions about implementations allow a person skilled in the art to understand that, for the purpose of convenient and brief description, division of the foregoing functional modules is used as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit. When the integrated unit is implemented in the form of a software functional unit and sold or used as an independent product, the integrated unit may be stored in a readable storage medium. Based on such understanding, the technical solutions in embodiments of this application essentially, or some of the technical solutions that contribute to a conventional technology, or all or some of the technical solutions may be embodied in a form of a software product. The software product is stored in a storage medium, and includes several instructions for instructing a device, for example, a single-chip microcomputer, a chip, or a processor (processor), to perform all or some of the steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, comprising:
receiving first information, wherein the first information indicates whether a region or a beam in a cell allows access or camping; and
determining, based on the first information, whether to access or camp on the cell.

2. The communication method according to claim 1, wherein the determining, based on the first information, whether to access or camp on the cell comprises:
when the first information indicates that a target region or a target beam allows access or camping, determining to access or camp on the cell, wherein the target region is a region in which a terminal is located in the cell, and the target beam is a beam on which the terminal is located in the cell.

3. The communication method according to claim 1 or 2, wherein the first information is cell barred indication information, and the cell barred indication information indicates whether the region or the beam in the cell is barred; or the first information is unified access control information.

4. The communication method according to claim 3, wherein when the first information is cell barred indication information, the method further comprises:
receiving second information, wherein the second information indicates whether the cell is barred; and
the determining, based on the first information, whether to access or camp on the cell comprises:
when the second information indicates that the cell is not barred, determining, based on the first information, whether to access or camp on the cell.

5. The communication method according to claim 3 or 4, wherein when the first information is cell barred indication information, the first information comprises identification information of a region or a beam that allows access or camping; or the first information comprises identification information of a region or a beam that is barred from access or camping; or the first information indicates identification information of a region or a beam and whether the corresponding region or beam is barred; or the first information comprises M bits, wherein the M bits respectively correspond to regions or beams in the cell, and all the M bits respectively indicate whether the corresponding regions or beams are barred.

6. The communication method according to claim 1, wherein when the first information is unified access control information, the method further comprises:
receiving unified access control information of the cell; and
the method further comprises:
determining, based on the first information and the unified access control information of the cell, whether access to or camping on the cell is allowed.

7. The communication method according to claim 6, wherein the first information comprises identification information of the region or the beam in the cell and corresponding unified access control information.

8. The communication method according to any one of claims 1 to 7, wherein the cell is a non-terrestrial network cell.

9. A communication method, comprising:
sending first information, wherein the first information indicates whether a region or a beam in a cell allows access or camping.

10. The communication method according to claim 9, wherein the first information is cell barred indication information, and the cell barred indication information indicates whether the region or the beam in the cell is barred; or the first information is unified access control information.

11. The communication method according to claim 10, wherein when the first information is cell barred indication information, the method further comprises:
sending second information, wherein the second information indicates whether the cell is barred.

12. The communication method according to claim 10 or 11, wherein when the first information is cell barred indication information, the first information comprises identification information of a region or a beam that allows access or camping; or the first information comprises identification information of a region or a beam that is barred from access or camping; or the first information indicates identification information of a region or a beam and whether the corresponding region or beam is barred; or the first information comprises M bits, wherein the M bits respectively correspond to regions or beams in the cell, and all the M bits respectively indicate whether the corresponding regions or beams are barred.

13. The communication method according to claim 9, wherein when the first information is unified access control information, the method further comprises:
sending unified access control information of the cell.

14. The communication method according to claim 13, wherein the first information comprises identification information of the region or the beam in the cell and corresponding unified access control information.

15. The communication method according to any one of claims 9 to 14, wherein when the first information indicates whether the beam in the cell allows access or camping, the first information comprises set indication information, the set indication information indicates whether different beams allow access or camping, and
the sending the first information comprises:
sending the set indication information on all beams; or
the first information comprises a plurality of pieces of beam-level indication information, different beams correspond to different beam-level indication information, the beam-level indication information indicates whether a beam corresponding to the beam-level indication information allows access or camping, and
the sending the first information comprises:
sending, to the beam, the beam-level indication information corresponding to the beam.

16. The communication method according to any one of claims 9 to 15, wherein the cell is a non-terrestrial network cell.

17. A communication apparatus, comprising:
a transceiver module, configured to receive first information, wherein the first information indicates whether a region or a beam in a cell allows access or camping; and
a processing module, configured to determine, based on the first information, whether to access or camp on the cell.

18. The communication apparatus according to claim 17, wherein the processing module is specifically configured to:
when the first information indicates that a target region or a target beam allows access or camping, determine to access or camp on the cell, wherein the target region is a region in which a terminal is located in the cell, and the target beam is a beam on which the terminal is located in the cell.

19. The communication apparatus according to claim 17 or 18, wherein the first information is cell barred indication information, and the cell barred indication information indicates whether the region or the beam in the cell is barred; or the first information is unified access control information.

20. The communication apparatus according to claim 19, wherein when the first information is cell barred indication information, the transceiver module is further configured to receive second information, wherein the second information indicates whether the cell is barred; and
the processing module is specifically configured to: when the second information indicates that the cell is not barred, determine, based on the first information, whether to access or camp on the cell.

21. The communication apparatus according to claim 19 or 20, wherein when the first information is cell barred indication information, the first information comprises identification information of a region or a beam that allows access or camping; or the first information comprises identification information of a region or a beam that is barred from access or camping; or the first information indicates identification information of a region or a beam and whether the corresponding region or beam is barred; or the first information comprises M bits, wherein the M bits respectively correspond to regions or beams in the cell, and all the M bits respectively indicate whether the corresponding regions or beams are barred.

22. The communication apparatus according to claim 17, wherein when the first information is unified access control information, the transceiver module is further configured to receive unified access control information of the cell; and
the processing module is specifically configured to determine, based on the first information and the unified access control information of the cell, whether access to or camping on the cell is allowed.

23. The communication apparatus according to claim 22, wherein the first information comprises identification information of the region or the beam in the cell and corresponding unified access control information.

24. The communication apparatus according to any one of claims 17 to 23, wherein the cell is a non-terrestrial network cell.

25. A communication apparatus, comprising:
a transceiver module, configured to send first information, wherein the first information indicates whether a region or a beam in a cell allows access or camping.

26. The communication apparatus according to claim 25, wherein the first information is cell barred indication information, and the cell barred indication information indicates whether the region or the beam in the cell is barred; or the first information is unified access control information.

27. The communication apparatus according to claim 26, wherein when the first information is cell barred indication information, the transceiver module is further configured to send second information, wherein the second information indicates whether the cell is barred.

28. The communication apparatus according to claim 26 or 27, wherein when the first information is cell barred indication information, the first information comprises identification information of a region or a beam that allows access or camping; or the first information comprises identification information of a region or a beam that is barred from access or camping; or the first information indicates identification information of a region or a beam and whether the corresponding region or beam is barred; or the first information comprises M bits, wherein the M bits respectively correspond to regions or beams in the cell, and all the M bits respectively indicate whether the corresponding regions or beams are barred.

29. The communication apparatus according to claim 25, wherein when the first information is unified access control information, the transceiver module is further configured to send unified access control information of the cell.

30. The communication apparatus according to claim 29, wherein the first information comprises identification information of the region or the beam in the cell and corresponding unified access control information.

31. The communication apparatus according to any one of claims 25 to 30, wherein when the first information indicates whether the beam in the cell allows access or camping, the first information comprises set indication information, the set indication information comprises barred indication information respectively corresponding to different beams, and
the transceiver module is specifically configured to send the set indication information on all beams; or
the first information comprises a plurality of pieces of beam-level indication information, different beams correspond to different beam-level indication information, the beam-level indication information indicates whether a beam corresponding to the beam-level indication information allows access or camping, and
the transceiver module is specifically configured to send, to the beam, the beam-level indication information corresponding to the beam.

32. The communication apparatus according to any one of claims 25 to 31, wherein the cell is a non-terrestrial network cell.

33. A communication apparatus, wherein the communication apparatus comprises a processor, and the processor is configured to perform the method according to any one of claims 1 to 16.

34. A computer-readable storage medium, wherein the computer-readable storage medium stores computer instructions, and when the computer instructions are run, the method according to any one of claims 1 to 16 is performed.

35. A chip, wherein the chip comprises a processor and a communication interface, and the processor and the communication interface are configured to support the chip in performing the method according to any one of claims 1 to 16.
